# EUROPEAN PATENT APPLICATION

(11) **EP 4 629 589 A1**
(43) Date of publication of application: **08.10.2025**
(21) Application number: 24758696.9
(22) Date of filing: 21.02.2024
(51) Int. Cl.: H04L 47/50, H04W 28/10, H04L 12/52, H04L 47/56, H04L 47/62, H04L 47/625, H04L 47/629

(54) **PACKET TRANSMISSION METHOD, APPARATUS, NETWORK DEVICE, AND STORAGE MEDIUM**

(71) Applicant: New H3C Technologies Co., Ltd., Hangzhou, Zhejiang 310052 (CN)
(72) Inventor: CHENG, Zuopin, Beijing 100102 (CN)
(74) Representative: Zimmermann & Partner Patentanwälte mbB
(86) International application number: PCT/CN2024/077866
(87) International publication number: WO 2025/175495

(57) **Abstract**

The present disclosure relates to a message transmission method, apparatus, a network device and a storage medium, which relates to the field of communication technology and are applied to a network device. The method comprises: monitoring a scheduling cycle, wherein one scheduling cycle is associated with at least one scheduling queue; forwarding a deterministic message buffered in a first scheduling queue having a preset identifier when it is monitored that a target scheduling cycle is reached, the target scheduling cycle comprising a first scheduling cycle associated with the first scheduling queue and a second scheduling cycle adjacent to the first scheduling cycle. By applying the technical solution provided by examples of the present disclosure, resource utilization of the network device can be improved.

## Description

### TECHNICAL FIELD

The present disclosure relates to the field of communication technology, and in particular to a message transmission method, apparatus, a network device and a storage medium.

### BACKGROUND

In a current deterministic transmission solution, it is necessary to specify a scheduling queue and a scheduling cycle of a deterministic flow mapping in advance, that is, in one scheduling cycle, a buffered message in a scheduling queue associated with the scheduling cycle is forwarded. Due to reasons such as planning, topology changes, and traffic changes, the duty cycles of different scheduling queues and scheduling cycles are different, which results in low resource utilization of a network device.

### SUMMARY

The object of examples of the present disclosure is to provide a message transmission method, apparatus, a network device, and a storage medium, so as to improve resource utilization of the network device. The specific technical solutions are as follows:
In a first aspect, examples of the present disclosure provide a message transmission method, which is applied to a network device, the method includes:
monitoring a scheduling cycle, wherein one scheduling cycle is associated with at least one scheduling queue; and
when it is monitored that a target scheduling cycle is reached, forwarding a deterministic message buffered in a first scheduling queue having a preset identifier, wherein the target scheduling cycle comprises a first scheduling cycle associated with the first scheduling queue and a second scheduling cycle adjacent to the first scheduling cycle.

In some examples, the preset identifier indicates that a buffered amount of deterministic messages in the first scheduling queue exceeds a first preset threshold value.

In some examples, a ratio of the first preset threshold value to a maximum forwarding capability value of the network device within a duration of one scheduling cycle is a first preset multiple, the first preset multiple is less than 1.

In some examples, a total buffered amount of deterministic messages in all scheduling queues of the network device is less than a second preset threshold value.

In some examples, a ratio of the second preset threshold value to a total maximum forwarding capability of the network device within a total duration of all scheduling cycles being a second preset multiple, the second preset multiple is less than 1.

In some examples, the first scheduling cycle is a preceding scheduling cycle of the second scheduling cycle;
wherein the operation of when it is monitored that a target scheduling cycle is reached, forwarding a deterministic message buffered in a first scheduling queue having a preset identifier includes:
when it is monitored that the first scheduling cycle is reached, forwarding a deterministic message buffered in the first scheduling queue having the preset identifier, a total buffered amount of the deterministic messages forwarded in the first scheduling cycle being a first preset threshold value;
when it is monitored that the second scheduling cycle is reached, forwarding a remaining deterministic message in the first scheduling queue.

In some examples, the method further includes:
when it is monitored that the second scheduling cycle is reached, forwarding a deterministic message buffered in a second scheduling queue associated with the second scheduling cycle after completing forwarding a deterministic message buffered in a scheduling queue associated with the preceding scheduling cycle, a total buffered amount of the deterministic messages forwarded in the second scheduling cycle being less than or equal to the first preset threshold value;
taking the a next scheduling cycle of the second scheduling cycle as a new second scheduling cycle and repeating the operation of when it is monitored that the second scheduling cycle is reached, forwarding a deterministic message buffered in a second scheduling queue associated with the second scheduling cycle after completing forwarding a deterministic message buffered in a scheduling queue associated with a preceding scheduling cycle, until a third scheduling cycle is reached, wherein a step size from the first scheduling cycle to the third scheduling cycle is a preset adjustment step size.

In some examples, the total buffered amount of the deterministic messages forwarded in the second scheduling cycle is equal to the first preset threshold value, there is a remaining deterministic message in the second scheduling queue; or
the total buffered amount of the deterministic messages forwarded in the second scheduling cycle is less than the first preset threshold value, there are no remaining deterministic messages in the second scheduling queue.

In some examples, the first scheduling cycle is a next scheduling cycle of the second scheduling cycle;
wherein the operation of when it is monitored that a target scheduling cycle is reached, forwarding a deterministic message buffered in a first scheduling queue having a preset identifier includes:
when it is monitored that the second scheduling cycle is reached, forwarding a deterministic message buffered in the first scheduling queue having the preset identifier after completing forwarding a deterministic message buffered in the second scheduling queue associated with the second scheduling cycle, a total buffered amount of deterministic messages forwarded in the second scheduling cycle being equal to a first preset threshold value;
when it is monitored that the first scheduling cycle is reached, forwarding the remaining deterministic messages in the first scheduling queue.

In some examples, the method further includes:
when it is monitored that a fourth scheduling cycle is reached, forwarding a deterministic message buffered in a scheduling queue associated with a next scheduling cycle of the fourth scheduling cycle after completing forwarding a deterministic message buffered in the scheduling queue associated with the fourth scheduling cycle, a total buffered amount of deterministic messages forwarded in the fourth scheduling cycle being less than or equal to the first preset threshold value;
taking a next scheduling cycle of the fourth scheduling cycle as a new fourth scheduling cycle, and repeating the operation of when it is monitored that a fourth scheduling cycle is reached, forwarding a deterministic message buffered in a scheduling queue associated with a next scheduling cycle of the fourth scheduling cycle after completing forwarding a deterministic message buffered in the scheduling queue associated with the fourth scheduling cycle, until the second scheduling cycle is reached, a step size from the fourth scheduling cycle to the first scheduling cycle is a preset adjustment step size.

In some examples, the total buffered amount of deterministic messages forwarded in the fourth scheduling cycle is equal to the first preset threshold value, there is a remaining deterministic message in the scheduling queue associated with the next scheduling cycle of the fourth scheduling cycle; or
the total buffered amount of deterministic messages forwarded in the fourth scheduling cycle is less than the first preset threshold value, there are no remaining deterministic messages in a scheduling queue associated with the next scheduling cycle of the fourth scheduling cycle.

In some examples, the network device is configured with a parameter of scheduling queue number, a parameter of scheduling queue length, a parameter of cycle number, and a parameter of cycle width, which are adjustable;
the parameter of scheduling queue number is to indicate the number of scheduling queues comprised in the network device;
the parameter of scheduling queue length is to indicate a buffered amount of one scheduling queue;
the parameter of cycle number is to indicate the number of scheduling cycles comprised in the network device;
the parameter of cycle width is to indicate a duration of one scheduling cycle.

In some examples, the network device is located in an aggregation layer or a core layer.

In a second aspect, examples of the present disclosure provide a message transmission apparatus, which is applied to a network device, including:
a monitoring module, to monitor a scheduling cycle, wherein one scheduling cycle is associated with at least one scheduling queue;
a forwarding module, to forward a deterministic message buffered in a first scheduling queue having a preset identifier when it is monitored that a target scheduling cycle is reached, wherein the target scheduling cycle includes a first scheduling cycle associated with the first scheduling queue and a second scheduling cycle adjacent to the first scheduling cycle.

In some examples, the preset identifier indicates that a buffered amount of the deterministic messages in the first scheduling queue exceeds a first preset threshold value.

In some examples, a ratio of the first preset threshold value to a maximum forwarding capability value of the network device within a duration of one scheduling cycle is a first preset multiple, the first preset multiple is less than 1.

In some examples, a total buffered amount of the deterministic messages in all scheduling queues of the network device is less than a second preset threshold value.

In some examples, a ratio of the second preset threshold value to a total maximum forwarding capability of the network device within a total duration of all scheduling cycles being a second preset multiple, the second preset multiple is less than 1.

In some examples, the first scheduling cycle is a preceding scheduling cycle of the second scheduling cycle;
the forwarding module is specifically to:
forward a deterministic message buffered in the first scheduling queue having the preset identifier when it is monitored that the first scheduling cycle is reached, a total buffered amount of the deterministic messages forwarded in the first scheduling cycle being a first preset threshold value;
forward a remaining deterministic message in the first scheduling queue when it is monitored that the second scheduling cycle is reached.

In some examples, the forwarding module is further to:
forward a deterministic message buffered in a second scheduling queue associated with the second scheduling cycle after completing forwarding a deterministic message buffered in a scheduling queue associated with a preceding scheduling cycle, when it is monitored that the second scheduling cycle is reached, a total buffered amount of deterministic messages forwarded in the second scheduling cycle being less than or equal to the first preset threshold value;
take a next scheduling cycle of the second scheduling cycle as a new second scheduling cycle and repeat the operation of forwarding, when it is monitored that the second scheduling cycle is reached, a deterministic message buffered in a second scheduling queue associated with the second scheduling cycle after completing forwarding a deterministic message buffered in the scheduling queue associated with the preceding scheduling cycle, until a third scheduling cycle is reached, wherein a step size from the first scheduling cycle to the third scheduling cycle is a preset adjustment step size.

In some examples, the total buffered amount of deterministic messages forwarded in the second scheduling cycle is equal to the first preset threshold value, there is a remaining deterministic message in the second scheduling queue; or
the total buffered amount of deterministic messages forwarded in the second scheduling cycle is less than the first preset threshold value, there are no remaining deterministic messages in the second scheduling queue.

In some examples, the first scheduling cycle is a next scheduling cycle of the second scheduling cycle;
the forwarding module is specifically to:
forward a deterministic message buffered in the first scheduling queue having the preset identifier after completing forwarding a deterministic message buffered in the second scheduling queue associated with the second scheduling cycle, when it is monitored that the second scheduling cycle is reached, a total buffered amount of deterministic messages forwarded in the second scheduling cycle being equal to the first preset threshold value;
forward a remaining deterministic message in the first scheduling queue when it is monitored that the first scheduling cycle is reached.

In some examples, the forwarding module is further to:
forward a deterministic message buffered in a scheduling queue associated with a next scheduling cycle of a fourth scheduling cycle after completing forwarding a deterministic message buffered in a scheduling queue associated with the fourth scheduling cycle when it is monitored that the fourth scheduling cycle is reached, a total buffered amount of deterministic messages forwarded in the fourth scheduling cycle is less than or equal to the first preset threshold value;
take a next scheduling cycle of the fourth scheduling cycle as a new fourth scheduling cycle, and repeat the operation of forwarding, when it is monitored that a fourth scheduling cycle is reached, a deterministic message buffered in a scheduling queue associated with the next scheduling cycle of the fourth scheduling cycle after completing forwarding a deterministic message buffered in the scheduling queue associated with the fourth scheduling cycle, until the second scheduling cycle is reached, the a step size from the fourth scheduling cycle to the first scheduling cycle is a preset adjustment step size.

In some examples, the total buffered amount of deterministic messages forwarded in the fourth scheduling cycle is equal to the first preset threshold value, there is a remaining deterministic message in a scheduling queue associated with the next scheduling cycle of the fourth scheduling cycle; or
the total buffered amount of deterministic messages forwarded in the fourth scheduling cycle is less than the first preset threshold value, there are no remaining deterministic messages in a scheduling queue associated with the next scheduling cycle of the fourth scheduling cycle.

In some examples, the network device is configured with a parameter of scheduling queue number, a parameter of scheduling queue length, a parameter of cycle number, and a parameter of cycle width, which are adjustable;
the parameter of scheduling queue number is to indicate the number of scheduling queues comprised in the network device;
the parameter of scheduling queue length is to indicate a buffered amount of one scheduling queue;
the parameter of cycle number is to indicate the number of scheduling cycles comprised in the network device; and
the parameter of cycle width is to indicate a duration of one scheduling cycle.

In some examples, the network device is located in an aggregation layer or a core layer.

In a third aspect, an example of the present disclosure provide a network device including a processor and a machine-readable storage medium, the machine-readable storage medium stores machine-executable instructions that can be executed by the processor, and cause the processor to carry out any one of the message transmission methods provided by the first aspect.

In a fourth aspect, an example of the present disclosure provide a computer-readable storage medium, which stores a computer program thereon, wherein when the computer program is executed by a processor, the computer program carries out any one of the message transmission methods provided by the first aspect.

In a fifth aspect, an example of the present disclosure provide a computer program product, which when run on a computer, causes the computer to carry out any one of the message transmission methods provided by the first aspect.

In the technical solutions provided by the examples of the present disclosure, a scheduling cycle is associated with a scheduling queue. For a first scheduling queue having a preset identifier associated with a first scheduling cycle, a network device forwards a message buffered in the first scheduling queue by using the first scheduling cycle and a second scheduling cycle adjacent to the first scheduling cycle. That is, the message buffered in a scheduling queue associated with one scheduling cycle is shared by two scheduling cycles. In this way, the messages forwarded in each of the scheduling cycles can be balanced, causing that the buffered message in each of the scheduling queue is output more smoothly, and thereby improving resource utilization of the network device.

Of course, implementing any product or method of the present disclosure does not need to achieve all the above-mentioned advantages simultaneously.

### BRIEF DESCRIPTION OF DRAWINGS

The drawings described here are used to provide a further understanding of the present disclosure and constitute a part of the present disclosure. The illustrative examples of the present disclosure and description thereof are used to explain the present disclosure and do not constitute an improper limitation of the present disclosure.
Figure 1 is a schematic diagram of deterministic transmission based on TSN;
Figure 2 is a schematic diagram of deterministic transmission based on CSQF;
Figure 3 is a schematic diagram of duty cycles of a scheduling queue;
Figure 4 is a first schematic flow chart of a message transmission method provided by an example of the present disclosure;
Figure 5 is a structural schematic diagram of a networking provided by an example of the present disclosure;
Figure 6 is a schematic diagram of a parameter configuration in a network device provided by an example of the present disclosure;
Figure 7 is a first detailed schematic diagram of block S42 provided by an example of the present disclosure;
Figure 8 is a schematic diagram of a message transmission scenario provided by an example of the present disclosure;
Figure 9 is a first schematic diagram of backward translation shared forwarding provided by an example of the present disclosure;
Figure 10 is a second schematic flow chart of a message transmission method provided by an example of the present disclosure;
Figure 11 is a second schematic diagram of backward translation shared forwarding provided by an example of the present disclosure;
Figure 12 is a second detailed schematic diagram of block S42 provided by an example of the present disclosure;
Figure 13 is a first schematic diagram of forward translation shared forwarding provided by an example of the present disclosure;
Figure 14 is a third schematic flow chart of a message transmission method provided by an example of the present disclosure;
Figure 15 is a second schematic diagram of forward translation shared forwarding provided by an example of the present disclosure;
Figure 16 is a structural schematic diagram of a message transmission apparatus provided by an example of the present disclosure;
Figure 17 is a structural schematic diagram of a network device provided by an example of the present disclosure.

### DETAILED DESCRIPTION

In order to make the objectives, technical solutions, and advantages of the present disclosure clearer, the present disclosure will be further described in detail below with reference to the accompanying drawings and examples. Obviously, the described examples are only some, but not all of the examples of the present disclosure. Based on the examples in the present disclosure, all other examples obtained by those of ordinary skills in the art fall within the protection scope of the present disclosure.

For ease of understanding, terms appearing in the examples of the present disclosure are explained below.

Time Sensitive Network (TSN): a set of Ethernet standards that achieve a timesynchronized, low-latency streaming service through core technologies such as precise time synchronization and timing scheduling, and provide low-latency isochronous standard data for each of units in the system, thus providing a basis for an integration of control, measurement, configuration, user interface (UI) and file exchange infrastructure. Deterministic network: a network that can ensure a deterministic bandwidth, a delay, a jitter, and an index of message loss rate for a service.

Slot: time is divided into slots in an equal manner, which is the smallest scheduling unit in a deterministic network.

Cyclic Specific Queuing and Forwarding (CSQF): a cyclic specific queuing and forwarding mechanism based on segment routing.

Latency: a delay caused by end-to-end network transmission of data messages.

Strict Priority (SP) algorithm: performing a scheduling strictly according to a priority order of a scheduling queue, that is, if there is a message with a high priority, the message with a high priority will always be forwarded first; a message with a low priority can be scheduled only after all messages in a high-priority queue are scheduled.

Weighted Round Robin (WRR) algorithm: each scheduling queue is assigned with a weight, and the scheduling queue is scheduled according to a weight ratio, to prevent low-priority traffic from waiting for a long time.

After decades of a vigorous development, Internet has achieved seamless connections between people and people, people and things, and as well as things and things. It brings great convenience to people's lives and work, and has a great influence. In scenarios such as "smart grid scenarios", "telemedicine", "audio and video entertainment" and "industrial remote control", data transmission of low latency and low jitter is required, that is, end-to-end deterministic transmission is required; in complex scenarios such as multi-services, heavy traffic and wide areas, end-to-end deterministic transmission is required as well. Deterministic network is a new type of Quality of Service (QoS) assurance technology that can meet the needs for the above-mentioned deterministic transmission and can be used in high real-time emerging scenarios such as autonomous driving, remote surgery, and holographic communications.

The demands for a deterministic network mainly come from two aspects:
1. Compatible with Ethernet standards: in traditional scenarios such as industrial automation and smart manufacturing, it is necessary to replace dozens of field bus and real-time Ethernet standards with Ethernet uniformly, and to integrate an information technology (IT) network and an operational technology (OT) network, thereby realizing a co-network transmission of best-effort flows and industrial latency-sensitive flows and reducing costs.
2. Carrying a deterministic service: as communication traffic between one machine and another increases, it is necessary to build a hyperloop in the network by combining the 5th Generation Mobile Communication Technology (5G) in emerging network application scenarios such as autonomous driving, remote surgery, and holographic communications, so as to achieve end-to-end transmission of a deterministic service, which is referred to as deterministic transmission.

The following four methods are adopted mainly by conventional Internet and industrial networks to ensure QoS:
a) Capacity expansion/light load: capacity expansion refers to expanding the bandwidth to keep the network in a light load state. Ethernet can now achieve a singleport bandwidth of 400G bits per second (bps).
b) Traffic shaping: it refers to limiting the rate of a specific port or traffic through token bucket, credit shaping or other technologies. For example, when the bandwidth of an outlet port of an upstream node is 8Gbps and a free bandwidth of a downstream node is only 2Gbps, a transmission bandwidth of the upstream node would be limited to less than 2Gbps, thus avoiding congestion on the downstream node.
c) Scheduling queue scheduling: it refers to scheduling traffic at an outlet port of a switching device. Firstly, messages are marked with different priorities, then a message is added into a scheduling queue with a corresponding priority, and finally the message is processed by different scheduling algorithms for different scheduling queues. Wherein, the scheduling algorithm for a scheduling queue includes SP algorithm, WRR algorithm and other algorithms.
d) Congestion control: when there is too much traffic and a buffer space in a buffer scheduling queue is insufficient, congestion and message loss will occur in the network. It is necessary to perform a congestion control to allow upstream nodes up to a sending end to reduce the rate of sending messages. Currently, congestion control methods based on an explicit congestion marker, such as the Explicit Congestion Notification (ECN) or the Data Center Transmission Control Protocol (DCTCP), can be used to detect a congestion, or congestion control methods based on the Round-Trip Time (RTT), such as Timely, Swift, can be used to detect a congestion.

The following problems exist in the above technical solutions for ensuring QoS:
1) It lacks a bounded latency jitter guarantee: since bandwidth resources of the outlet port are statistically multiplexed, it lacks a QoS guarantee mechanism in the latency dimension and there will always be queuing and congestion in the best-effort forwarding. Service latency is in the order of 50 milliseconds (ms) to 1 second (s), and there is long tail latency.
2) It is difficult to deal with incast and a burst traffic: since the amount of traffic of the sending end and the time of sending a message are uncontrollable, there are phenomena in the network where multiple data flows aggregate at downstream nodes (i.e., incast) and traffic bursts at a certain moment (i.e., traffic burst), which causes a congestion and message loss in the network.

To address the above two problems, the concept of Time Division Multiplexing (TDM) is introduced in the related technologies to achieve clock synchronization and slot planning. In short, the entire network schedules and forwards messages according to a unified beat, thereby achieving a determined latency and jitter.
(1) Clock synchronization: that is, the clocks of the entire network are synchronized, the clocks of a terminal and a switching device are the same, and a network interface card also needs to stamp a message with a hard timestamp.
   There are currently two clock synchronization methods: one is a master-slave mode, wherein a most accurate clock is selected as a master clock, and other slave clocks are synchronized with the master clock; and the other is a voting mode, for example, if there are 9 devices in a domain, and the current clocks of five devices show 1:00, while those of the other four devices show 1:01, the clocks of all 9 devices are adjusted to 1:00 according to the principle of the minority obeying the majority.
(2) Slot planning: slots are transmission resources in the time dimension of an outlet port of a switching device.

For example, if the bandwidth of the outlet port of a switching device is 1Gbps, and a message has 1500Bytes, namely 12000bits, the transmission of this message takes up slot resources of 12µs of a certain cycle of the outlet port. Which slot resources are taken up is determined by the transmission start time of the message.

Since most industrial traffic is a message that is sent cyclically and smaller than the Maximum Transmission Unit (MTU), the start time of sending the message by the terminal can be controlled. By means of global slot planning (i.e. Time Division Multiplexing), each of the messages is allowed to be "triggered" and sent only at the time calculated in advance, ensuring that slots taken up when the message is being transmitted at the outlet port of each hop do not conflict with each other, thereby avoiding the occurrence of incast and a burst traffic and thus achieving an "on-time and accurate" transmission.

Currently, technologies to achieve deterministic latency and jitter include TSN and CSQF.

Deterministic transmission based on TSN adopts Time Awareness Shaper (TAS) scheduling, and uses a priority gating scheduling queue. That is, a gating switch is added following the priority scheduling queue, and the opening and closing of the gating switch is controlled by the gating time schedule to meet the requirement of latency and jitter.

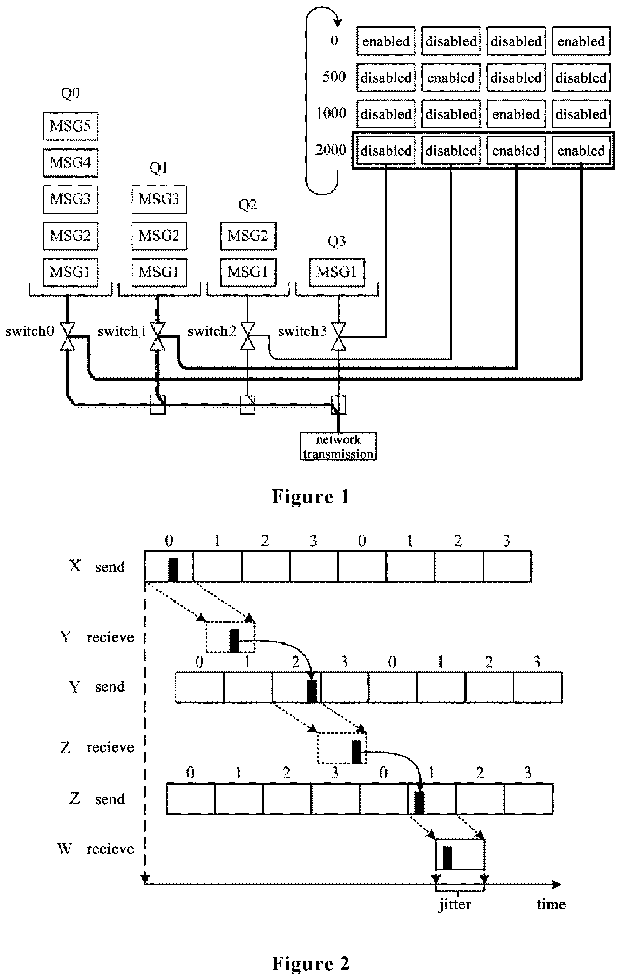

A schematic diagram of deterministic transmission based on TSN is shown in Figure 1. An outlet port of a network device includes four scheduling queues Q0~Q3, and messages MSG1~MSG5 are stored in each of the scheduling queues. Gating switches 0 ~ 3 are installed following each scheduling queue, and the gating time schedule is 2000 µs per cycle. The network device enables a corresponding gating switch according to the gating time schedule for the messages stored in the corresponding scheduling queue. For example, the gating switches 0 and 3 are enabled and the gating switches 1 and 2 are disabled at 0 µs, thereby messages stored in Q0 and Q3 are then forwarded; the gating switches 0, 1 and 3 are disabled and the gating switch 2 is enabled at 500 µs, thereby messages stored in Q2 are then forwarded; the gating switches 0, 2 and 3 are disabled and the gating switch 1 is enabled at 1000 µs, and messages stored in Q1 are then forwarded; and the gating switches 2 and 3 are disabled and the gating switches 0 and 1 are enabled at 2000 µs, and messages stored in Q0 and Q1 are then forwarded, as shown in Figure 1.

Deterministic transmission based on CSQF achieves an end-to-end deterministic latency and jitter by frequency synchronization between devices and a cyclic queuing and forwarding of a scheduling queue at an outlet port of the device.

A schematic diagram of deterministic transmission based on CSQF is shown in Figure 2. Network devices X, Y, Z, and W respectively pre-plan a mapping relationship between a deterministic flow and a scheduling slot (also referred to as a scheduling cycle). As shown in Figure 2, the network device X pre-plans a mapping relationship between the deterministic flow and a scheduling cycle 0, the network device Y pre-plans a mapping relationship between the deterministic flow and a scheduling cycle 2, and the network device Z pre-plans a mapping relationship between the deterministic flow and a scheduling cycle 1. The network device X stores the deterministic flow in a scheduling queue associated with the scheduling cycle 0, and forwards the deterministic flow to the network device Y during the scheduling cycle 0; the network device Y stores the deterministic flow in a scheduling queue associated with the scheduling cycle 2, and forwards the deterministic flow to the network device Z during the scheduling cycle 2; and the network device Z stores the deterministic flow in a scheduling queue associated with the scheduling cycle 1, and forwards the deterministic flow to the network device W during the scheduling cycle 1.

In one network device, deterministic flow is set to be sent within one scheduling cycle, wherein the earliest time for sending each of the messages in the deterministic flow is the start time of the scheduling cycle, and the latest time is the end time of the scheduling cycle. Therefore, the maximum latency and jitter of the network device is one scheduling cycle.

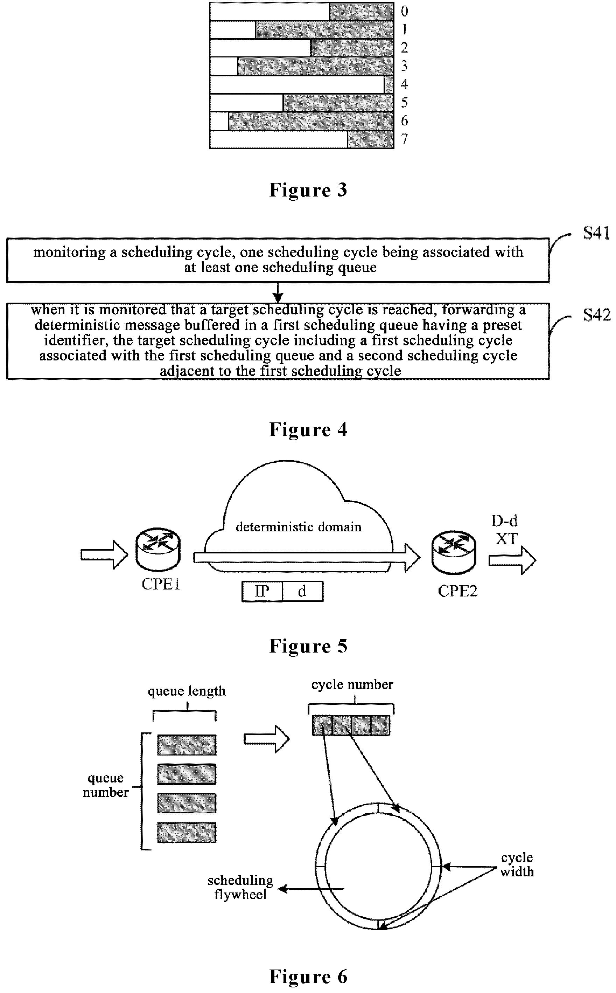

The deterministic transmission can be achieved on the basis of the above scheduling based on TSN, CSQF, but the scheduling queue and cycle of the deterministic flow mapping need to be specified in advance. Due to planning, topology changes, traffic changes and other reasons, the duty cycles of different scheduling queues and scheduling cycles are different. A schematic diagram of the duty cycles of a scheduling queue is shown in Figure 3. In Figure 3, one scheduling queue corresponds to one cycle, and a number represents not only an identifier of the scheduling queue, but also an identifier of the scheduling cycle, a filled portion in each scheduling cycle represents a deterministic message, and different duty cycles of different scheduling queues indicate different duty cycles of different cycles. It can be seen from Figure 3, in the scheduling queues 0 to 7, the scheduling queues 0, 4, and 7 are relatively free, while the scheduling queues 1, 3, and 6 are relatively busy.

Since some cycles are busy and others are not, it results in a low resource utilization of the network device.

In order to improve the resource utilization of a network device, an example of the present disclosure provide a message transmission method, which is applied to a network device, as shown in Figure 4. The network device may be a device with communication functions, such as a router or a switching device. The network device may be located in an aggregation layer or a core layer, such as the network device in a deterministic domain in the networking as shown in Figure 5. The network device may also be a device for end-to-end communication, such as Customer Premise Equipment (CPE) 1 and CPE2 in the networking as shown in Figure 5. Wherein, the deterministic domain may be a Resilient Cyclic Queuing and Forwarding (RCQF) domain or a CSQF domain applying the technical solutions provided by the examples of the present disclosure, or the deterministic domain may be a wide area network or a local area network. The message transmission method provided by an example of the present disclosure includes the following blocks:
Block S41: monitoring a scheduling cycle, wherein one scheduling cycle is associated with at least one scheduling queue;
Block S42: when it is monitored that a target scheduling cycle is reached, forwarding a deterministic message buffered in a first scheduling queue having a preset identifier, wherein the target scheduling cycle includes a first scheduling cycle associated with the first scheduling queue and a second scheduling cycle adjacent to the first scheduling cycle.

In technical solution provided by the example of the present disclosure, a scheduling cycle is associated with a scheduling queue. For a first scheduling queue associated with the first scheduling cycle and having a preset identifier, the network device forwards a message buffered in the first scheduling queue by using the first scheduling cycle and a second scheduling cycle adjacent to the first scheduling cycle. That is, a message buffered in a scheduling queue associated with one scheduling cycle is shared by two scheduling cycles. In this way, the messages forwarded in each of the scheduling cycles can be balanced, causing that the buffered message in each of the scheduling queue is output more smoothly, and thereby improving resource utilization of the network device.

Further, the technical method provided by the example of the present disclosure is carried out during scheduling and forwarding a message, instead of during adding a message into a queue, thus it is of higher degree of freedom and more friendly to resource planning, topology and traffic changes in terms of controlling.

In the above block S41, the scheduling queue is to buffer a deterministic message, and the deterministic message is a message for deterministic transmission. A scheduling cycle can be understood as a slot for scheduling and forwarding, and one scheduling cycle can be associated with one or more scheduling queues, and one scheduling queue is associated with one scheduling cycle.

In an example of the present disclosure, in order to adapt to different applications and traffic requirements, a network device can be provided with a parameter of scheduling queue number, a parameter of scheduling queue length, a parameter of cycle number, and a parameter of cycle width, which are adjustable, as shown in Figure 6.
(1) Parameter of scheduling queue number. The parameter of scheduling queue number is to indicate the number of scheduling queues included in a network device.
   In an example of the present disclosure, the number of scheduling queues can be planned based on characteristics such as the number and bandwidth of deterministic flows, that is, the above parameter of scheduling queue number is preset.
(2) Parameter of scheduling queue length. The parameter of scheduling queue length is to indicate a buffered amount of one scheduling queue.
   In an example of the present disclosure, the length of a scheduling queue can be planned based on properties such as the size of the deterministic flow and resource conditions such as buffer resources, that is, the above parameter of scheduling queue length is preset.
(3) Parameter of cycle number. The parameter of cycle number is to indicate the number of scheduling cycles included in a network device.
   In an example of the present disclosure, the parameter of cycle number can be set based on the number of scheduling queues. For ease of establishing the association between a scheduling queue and a scheduling cycle, the number of scheduling queues is a positive integer multiple of that of scheduling cycles. For example, the number of scheduling queues is 1, 2, or 3 times the number of scheduling cycles, or the like.
(4) Parameter of cycle width. The parameter of cycle width is to indicate a duration of one scheduling cycle.

In an example of the present disclosure, the cycle width of each scheduling cycle, that is, the time taken up by each scheduling cycle, can be set based on traffic requirements such as end-to-end jitter accuracy requirements, and underlying hardware conditions such as crystal oscillator and scheduling accuracy. For example, if the traffic requirement is that the end-to-end jitter accuracy is less than 10 µs, the parameter of cycle width can be set to 10 µs, which indicates that a deterministic message can be sent out within 10 µs.

The number of bytes that can be sent out by different interfaces in one scheduling cycle is different. For example, a message of about 12,000 bytes can be sent out by a 10Gbps interface in 10 µs.

After setting the above four parameters, a scheduling queue is associated with a scheduling cycle, and a deterministic flow (that is, a key traffic flow) can be mapped to one or more scheduling queues. As shown in Figure 6, a single scheduling cycle is just one section (that is, one slot) of an entire scheduling flywheel. The scheduling flywheel rotates over and over again, and the scheduling cycle also changes alternately. If the scheduling flywheel is divided into 8 sections, it corresponds to 8 scheduling cycles. If the width of a single scheduling cycle is 10 µs, it takes 80 µs for the scheduling flywheel to turn one round. In other words, the scheduling flywheel can turn 12.5 rounds in 1s. In an example of the present disclosure, a scheduling strategy can be changed to adapt to the requirements of different applications and traffic by adjusting parameters such as "the scheduling queue length", "the scheduling queue number", "the cycle number", and "the cycle width".

For example, if an end-to-end jitter requirement is low, the width of a single scheduling cycle can be set to a larger value, so that more messages can be sent out in a single scheduling cycle. There are two advantages for this: 1) as the width of the scheduling cycle increases, the forwarding efficiency of the network device increases, since the number of switching of the scheduling cycle per unit time decreases, the protection time caused by the switching of the scheduling cycle also decreases; 2) the network device can aggregate more deterministic messages, since the width of the scheduling cycle increases and more messages can be forwarded in one single scheduling cycle, more deterministic messages can be aggregated and forwarded in one scheduling cycle.

In another example, different deterministic flows are mapped to different scheduling queues by increasing the number of scheduling queues and the number of scheduling cycles, so as to better and more finely support more deterministic flows, thus a dedicated scheduling queue can be reserved for a particular flow.

In the above block S42, the target scheduling cycle includes the first scheduling cycle and the second scheduling cycle that are adjacent to each other. The first scheduling cycle may be a preceding scheduling cycle of the second scheduling cycle or a following scheduling cycle of the second scheduling cycle, which is not limited. For example, in Figure 3, the scheduling cycle 3 associated with the scheduling queue 3 is the first scheduling cycle, and the second scheduling cycle may be the scheduling cycle 2 associated with the scheduling queue 2, or the scheduling cycle 4 associated with the scheduling queue 4.

The preset identifier can be represented by any symbol. For example, the preset identifier can be represented by a letter "S" or a number "1", wherein the symbol representing the preset identifier can be stored in a storage location corresponding to each of the scheduling queues, to facilitate the network device determining whether each scheduling queue has a preset identifier and whether to perform a shared forwarding.

The preset identifier can also be realized in other forms. For example, in a case where the network device is configured with a register, the bit width of the register is the same as the number of scheduling queues, and the scheduling queue is in one-to-one corresponding relationship with the bit of the register. When one bit is set to 1, it indicates that a scheduling queue corresponding to this bit has a preset identifier; otherwise it indicates that the scheduling queue corresponding to this bit does not have a preset identifier. In an example of the present disclosure, the specific form of realization of the preset identifier is not limited.

The scheduling queue associated with the first scheduling cycle is the first scheduling queue, and the scheduling queue associated with the second scheduling cycle is the second scheduling queue. When it is monitored by the network device that the first scheduling cycle is reached at the current time, the network device forwards a deterministic message buffered in the first scheduling queue; when it is monitored by the network device that the second scheduling cycle is reached at the current time, the network device forwards a deterministic message buffered in the second scheduling queue, and it still forwards a remaining deterministic message buffered in the first scheduling queue at the same time.

The deterministic message buffered in the first scheduling queue is shared and forwarded by two scheduling cycles, which can achieve balanced forwarding of the messages in each of the scheduling cycles, causing that the messages buffered in each scheduling queue can be output more smoothly, thereby improving resource utilization of the network device.

In an example of the present disclosure, in order to further improve resource utilization of the network device, the network device can be pre-configured with a first preset threshold value of a buffered amount which can be a quantity or a data amount, and a preset identifier indicates that a buffered amount of deterministic messages in the first scheduling queue exceeds the first preset threshold value. The size of the first preset threshold value can be set according to actual needs. In one example, the ratio of the first preset threshold value to a maximum forwarding capability value of a network device within a duration of one scheduling cycle is a first preset multiple, wherein the first preset multiple is less than 1. For example, the first preset multiple is 50%, 60% or 70%, or the like.

Taking a 10Gbps interface as an example, a message of about 12,000 bytes can be sent out within 10 µs. If the width of one scheduling cycle is 10 µs, the maximum forwarding capability of the network device within the duration one scheduling cycle is 12,000 bytes. Assuming that the first preset multiple is 50%, then the first preset threshold value is 12000* 50%=6000 bytes.

If the buffered amount of deterministic messages in the first scheduling queue exceeds the first preset threshold value, it means that the first scheduling cycle is relatively busy and the network device can add a preset identifier to the first scheduling queue, and carry out the above block S42, so that the message forwarding of the first scheduling cycle is shared by the second scheduling cycle; if the buffered amount of deterministic messages in the first scheduling queue is less than or equal to the first preset threshold value, it means that the first scheduling cycle is relatively free and the message forwarding thereof does not need to be shared. Therefore, when the first scheduling cycle is reached, the network device forwards the deterministic message buffered in the first scheduling queue, and when the second scheduling cycle is reached, the network device forwards the deterministic message buffered in the second scheduling queue and no longer forwards the deterministic message buffered in the first scheduling queue.

In an example of the present disclosure, since the deterministic messages forwarded in one scheduling cycle can be shared and forwarded by other adjacent scheduling cycles, for a relatively busy scheduling cycle, the network device can increase the length of the scheduling queue associated with this scheduling cycle, so that the scheduling queue associated with this scheduling cycle can buffer more messages, thus avoiding the problem that messages to be forwarded in this scheduling cycle cannot be written into the scheduling queue and are discarded due to the limited length of the scheduling queue, thereby improving the reliability of the network. Meanwhile, since the forwarding of messages can be shared with the help of adjacent scheduling cycles, it is ensured that messages forwarding in relatively busy scheduling cycles can be completed.

In an example of the present disclosure, in order to further improve the resource utilization of the network device and avoid the waste of resources, the network device can be pre-configured with a second preset threshold value of a buffered amount which can be a quantity or a data amount, and a total buffered amount of deterministic messages in all scheduling queues of the network device is less than the second preset threshold value. The size of the second preset threshold value can be set according to actual needs. In one example, the ratio of the second preset threshold value to a total maximum forwarding capability of the network device within the total duration of all scheduling cycles is a second preset multiple, which is less than 1. For example, the second preset multiple is 50%, 60% or 70%, or the like.

Taking a 10Gbps interface as an example, a message of about 12,000 bytes can be sent out within 10 µs. If the network device is configured with 8 scheduling cycles and the width of one scheduling cycle is 10 µs, the maximum forwarding capability of the network device within the duration of one scheduling cycle is 12,000 bytes, and the total maximum forwarding capability of the network device within the total duration of all scheduling cycles is 12,000* 8= 96,000 bytes. Assuming that the second preset multiple is 50%, then the second preset threshold value is 96000* 50%= 48000 bytes.

When the total buffered amount of deterministic messages in all scheduling queues of the network device is less than the second preset threshold value, it means that there may be a relatively busy scheduling cycle and a relatively free scheduling cycle in the network device, and the network device carries out the above block S42 for shared forwarding. For example, if the buffered amount of deterministic messages in the first scheduling queue exceeds the first preset threshold value, when the target scheduling cycle is reached, a deterministic message buffered in the first scheduling queue is forwarded. If the total buffered amount of deterministic messages in all scheduling queues of the network device is greater than or equal to the second preset threshold value, it means that the network device is relatively busy in general, that is, each of the scheduling cycles is relatively busy. When the first scheduling cycle is reached, the network device forwards a deterministic message buffered in the first scheduling queue, and when the second scheduling cycle is reached, the network device forwards a deterministic message buffered in the second scheduling queue and no longer forwards a deterministic message buffered in the first scheduling queue. That is, there is no need to perform shared forwarding, which saves network device resources.

In an example of the present disclosure, the method for the network device to carry out a shared forwarding through adjacent scheduling cycles can be divided into two modes, namely a backward translation shared forwarding mode and a forward translation shared forwarding mode. These two modes are described in the following.

### (1) A backward translation shared forwarding mode.

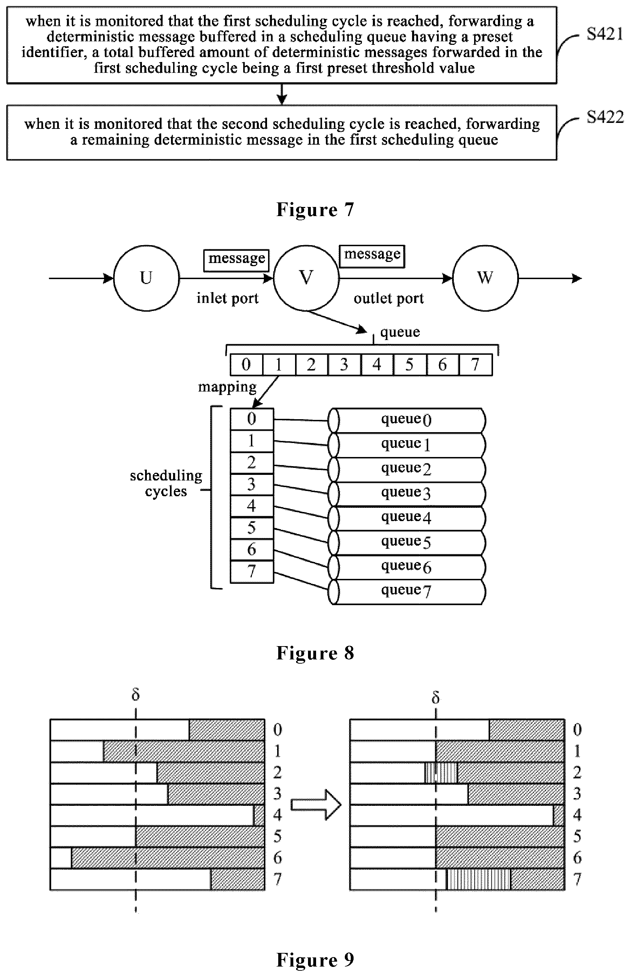

When the network device adopts the backward translation shared forwarding mode, the first scheduling cycle is a preceding scheduling cycle of the second scheduling cycle. In this case, as shown in Figure 7, the above block S42 may include:
Block S421: when it is monitored that the first scheduling cycle is reached, forwarding a deterministic message buffered in a scheduling queue having a preset identifier, a total buffered amount of deterministic messages forwarded in the first scheduling cycle being a first preset threshold value;
Block S422: when it is monitored that the second scheduling cycle is reached, forwarding a remaining deterministic message in the first scheduling queue.

For example, in the message transmission scenario shown in Figure 8, a node V receives a deterministic message sent by a node U from an inlet port and writes the deterministic message into a scheduling queue. Each of the scheduling queues is mapped to a corresponding scheduling cycle, as shown in the figure, a scheduling queue i is mapped to a scheduling cycle i, i=0, 1, ... 7; the node V cyclically schedules the corresponding scheduling queue according to the scheduling cycle, and sends the deterministic message to a node W through an outlet port. When the node V cyclically schedules the corresponding scheduling queue according to the scheduling cycle, it uses a backward translation shared forwarding mode, as shown in Figure 9.

In Figure 9, one scheduling queue corresponds to one scheduling cycle, a number represents an identifier of a scheduling cycle, a filling in each scheduling cycle represents a deterministic message forwarded in the scheduling cycle, and a dotted line represents a first preset threshold value δ. The left diagram of Figure 9 shows a deterministic message that should be forwarded in each scheduling cycle, that is, the deterministic message buffered in the scheduling queue associated with each scheduling cycle. It can be seen from the left diagram of Figure 9 that the scheduling queues 0, 4, and 7 are relatively free, while the scheduling queues 1 and 6 are relatively busy.

By using the technical solution provided by the examples of the present disclosure, taking the scheduling queue 1 as an example, the number of messages buffered in the scheduling queue 1 exceeds δ, and the network device adds a preset identifier to the scheduling queue 1. That is, the first scheduling queue is the scheduling queue 1, and the first scheduling cycle is a scheduling cycle 1. When the scheduling cycle 1 is reached, the network device forwards the buffered amount δ of the deterministic messages in the scheduling queue 1. For a remaining deterministic message that exceeds the buffered amount δ in the scheduling queue 1, the network device translates them to the scheduling cycle 2. That is, when the scheduling cycle 2 is reached, the network device forwards the excessive deterministic messages. After completing forwarding these remaining deterministic messages, the network device forwards a deterministic message in the scheduling queue 2. Other relatively busy scheduling queues, such as the scheduling queue 6, perform shared forwarding in the same way. At this time, a message actually forwarded in each scheduling cycle is shown in the right diagram of Figure 9. In the right diagram of Figure 9, the portion filled with right slanted lines represents a deterministic message buffered in the scheduling queue associated with the corresponding scheduling cycle, and the portion filled with vertical lines represents that a deterministic message buffered in the scheduling queue associated with the preceding scheduling cycle is translated to the deterministic messages of this scheduling cycle.

In the technical solution provided by the examples of the present disclosure, the network device translates the deterministic messages in the first scheduling queue that exceed the first preset threshold value to the second scheduling cycle for forwarding, thus avoiding the first scheduling cycle being too busy and ensuring that messages are output more smoothly, thereby overall improving the forwarding efficiency of messages and the resource utilization of the network device.

In order to further ensure the smooth output of messages and improve the forwarding efficiency of messages and the utilization of network device resources, in some examples, the network device can further be configured with a preset adjustment step size, to complete the sharing for the first scheduling cycle through multiple scheduling cycles. Wherein, the preset adjustment step size can be set according to a scheduling cycle margin between devices. For example, in Figure 2, the cycle during which the network device X sends a deterministic message is the scheduling cycle 0, and the cycle during which the network device Y sends a deterministic message is the scheduling cycle 2. There are 2 scheduling cycles between the scheduling cycle 2 and the scheduling cycle 0. That is, the scheduling cycle margin between the network device X and network device Y is 2. Based on this, the network device X can set the preset adjustment step size to 2. Similarly, the network device Y can set the preset adjustment step size to 2 or 3.

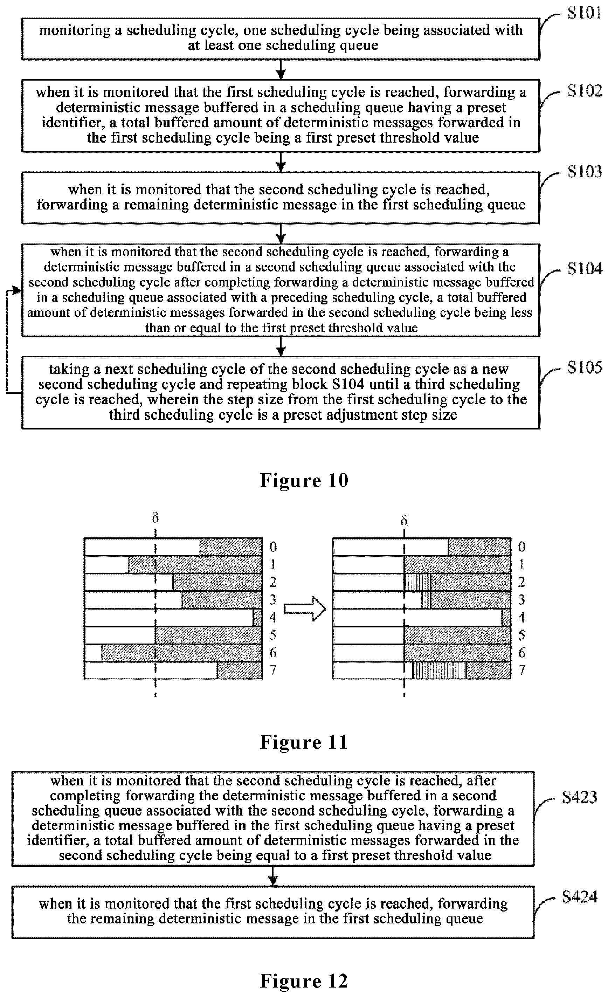

In this case, as shown in Figure 10, the above message transmission method may include:
Block S101: monitoring a scheduling cycle, wherein one scheduling cycle is associated with at least one scheduling queue, which is the same as the above block S41.
Block S102: when it is monitored that the first scheduling cycle is reached, forwarding a deterministic message buffered in a scheduling queue having a preset identifier, a total buffered amount of deterministic messages forwarded in the first scheduling cycle being a first preset threshold value, which is the same as the above block S421.
Block S103: when it is monitored that the second scheduling cycle is reached, forwarding a remaining deterministic message in the first scheduling queue, which is the same as the above block S422.
Block S104: when it is monitored that the second scheduling cycle is reached, forwarding a deterministic message buffered in a second scheduling queue associated with the second scheduling cycle after completing forwarding a deterministic message buffered in a scheduling queue associated with a preceding scheduling cycle, a total buffered amount of deterministic messages forwarded in the second scheduling cycle being less than or equal to the first preset threshold value.

When block S104 is executed for the first time, the preceding scheduling cycle of the second scheduling cycle is the first scheduling cycle. When block S104 is not executed for the first time, the preceding scheduling cycle of the second scheduling cycle is the old second scheduling cycle. When it is monitored that the second scheduling cycle is reached, the network device first forwards a remaining deterministic message in the scheduling queue associated with the preceding scheduling cycle, and then forwards a deterministic message buffered in the second scheduling queue associated with the current second scheduling cycle after completing forwarding the remaining deterministic message in the scheduling queue associated with the preceding scheduling cycle.

In an example of the present disclosure, in order to further improve the smoothness of message output, the total buffered amount of deterministic messages forwarded in the second scheduling cycle is equal to the first preset threshold value, there is a remaining deterministic message in the second scheduling queue; or the total buffered amount of deterministic messages forwarded in the second scheduling cycle is less than the first preset threshold value, there are no remaining deterministic messages in the second scheduling queue. That is, the network device tries its best to forward the deterministic messages in the second scheduling queue so as to reduce the transmission jitter between devices and further improve the smoothness of messages output.

Block S105: taking a next scheduling cycle of the second scheduling cycle as a new second scheduling cycle and repeating block S104 until a third scheduling cycle is reached, wherein the step size from the first scheduling cycle to the third scheduling cycle is a preset adjustment step size.

In an example of the present disclosure, the network device can determine the third scheduling cycle based on the preset adjustment step size after determining the first scheduling cycle that requires shared forwarding.

After obtaining the new second scheduling cycle, the network device repeats block S104, that is, when it is monitored that the second scheduling cycle is reached, the network device forwards a remaining deterministic message in the scheduling queue associated with the preceding scheduling cycle, and then forwards a deterministic message buffered in the second scheduling queue associated with the current second scheduling cycle after completing forwarding the remaining deterministic message in the scheduling queue associated with the preceding scheduling cycle.

When the new second scheduling cycle is the third scheduling cycle, the network device no longer executes block S105, that is, the network device no longer takes the next scheduling cycle of the third scheduling cycle as the new second scheduling cycle.

Still taking the message transmission scenario shown in Figure 8 as an example, the node V adopts the backward translation shared forwarding mode when it cyclically schedules the corresponding scheduling queues according to the scheduling cycles, as shown in Figure 11.

In Figure 11, one scheduling queue corresponds to one scheduling cycle, a number represents an identifier of a scheduling cycle, a filling in each scheduling cycle represents a deterministic message forwarded in the scheduling cycle, and a dotted line represents a first preset threshold value δ. The left diagram of Figure 11 shows the deterministic message that should be forwarded in each scheduling cycle, that is, the deterministic message buffered in the scheduling queue associated with each scheduling cycle. It can be seen from the left diagram of Figure 11 that the scheduling queues 0, 4, and 7 are relatively free, while the scheduling queues 1 and 6 are relatively busy.

By using the technical solution provided by the examples of the present disclosure, taking scheduling queue 1 as an example, the number of messages buffered in the scheduling queue 1 exceeds δ, and the network device adds a preset identifier to the scheduling queue 1. That is, the first scheduling queue is the scheduling queue 1, and the first scheduling cycle is the scheduling cycle 1. The preset adjustment step size is 2, and the third scheduling cycle is the scheduling cycle 3.

When the scheduling cycle 1 is reached, the network device forwards the buffered amount δ of deterministic messages in the scheduling queue 1. For a remaining deterministic message that exceeds the buffered amount δ in the scheduling queue 1, the network device translates it to the scheduling cycle 2. That is, when the scheduling cycle 2 is reached, the network device forwards the remaining deterministic messages. After completing forwarding the remaining deterministic messages, the network device forwards the deterministic messages in the scheduling queue 2, and the total buffered amount of deterministic messages forwarded in the scheduling cycle 2 is less than or equal to δ. For a remaining deterministic message in the scheduling queue 2, the network device translates it to the scheduling cycle 3. That is, when the scheduling cycle 3 is reached, the network device forwards these deterministic messages. After completing forwarding these deterministic messages, the network device forwards a deterministic message in the scheduling queue 3, and the total buffered amount of deterministic messages forwarded in the scheduling cycle 3 is less than or equal to δ. When the scheduling cycle 3 is reached, the step size of shared forwarding reaches the preset adjustment step size, and the network device will not translate some deterministic messages in the scheduling queue 3 to a scheduling cycle 4.

Other relatively busy scheduling queues, such as scheduling queue 6, perform shared forwarding in the same way. At this time, the messages actually forwarded in each scheduling cycle are shown in the right diagram of Figure 11. In the right diagram of Figure 11, a portion filled with right slanted lines represents a deterministic message buffered in the scheduling queue associated with the corresponding scheduling cycle, and a portion filled with vertical lines represents that a deterministic message buffered in the scheduling queue associated with the preceding scheduling cycle is translated to the deterministic messages of this scheduling cycle.

In the technical solution provided by the examples of the present disclosure, scheduling queue shaping, sharing between scheduling cycles and smooth output of messages can be achieved through the adjustment and optimization of the above-mentioned first preset threshold value, backward translation shared forwarding, preset adjustment step size and the like, thereby overall improving forwarding efficiency and resource utilization.

Further, there is a certain scheduling cycle margin in the existing cyclic queuing and forwarding network planning, as shown in Figure 2. By adopting the message transmission method provided by the examples of the present disclosure and using adjacent scheduling cycles for shared forwarding, the scheduling cycle margin can be utilized fully and flexibly.

Further, the above-mentioned network device can be deployed in an aggregation layer or a core layer. By using the technical solutions provided by the examples of the present disclosure, the utilization of the aggregation layer and the core layer can be improved and the bottleneck problem of the network can be solved. In addition, by using the technical solutions provided by the examples of the present disclosure, not only the jitter between network devices in the aggregation layer and the core layer is eliminated, but also the end-to-end jitter can be controlled to a reasonable extent by the devices at both ends of the end-to-end communication through latency compensation and other methods, thus ensuring deterministic transmission. As shown in Figure 5, the network devices in the CQF domain transmit IP deterministic messages with the technical solution provided by the examples of the present disclosure. The transmitted messages carry a dwell delay d, and the terminal device CPE2 of end-to-end communication uses a reference delay D and the dwell delay d to perform delay compensation on the messages, that is, the messages are transmitted after being compensated with Dd. In this way, the end-to-end jitter can be controlled within a reasonable time range XT.

### (2) Forward translation shared forwarding.

When the network device adopts the forward translation shared forwarding mode, the first scheduling cycle is a next scheduling cycle of the second scheduling cycle. In this case, as shown in Figure 12, the above block S42 may include:
Block S423: when it is monitored that the second scheduling cycle is reached, after completing forwarding the deterministic message buffered in a second scheduling queue associated with the second scheduling cycle, forwarding a deterministic message buffered in the first scheduling queue having a preset identifier, a total buffered amount of deterministic messages forwarded in the second scheduling cycle being equal to a first preset threshold value;
Block S424: when it is monitored that the first scheduling cycle is reached, forwarding the remaining deterministic message in the first scheduling queue.

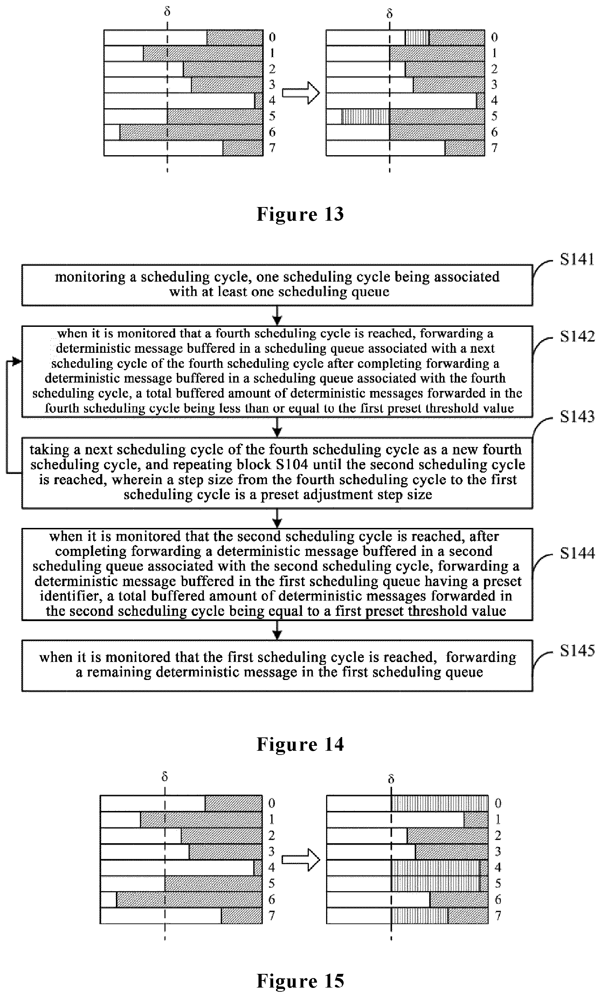

Still taking the message transmission scenario shown in Figure 8 as an example, the node V adopts the forward translation shared forwarding mode when it cyclically schedules the corresponding scheduling queues according to the scheduling cycles, as shown in Figure 13.

In Figure 13, one scheduling queue corresponds to one scheduling cycle, a number represents an identifier of a scheduling cycle, and a filling in each scheduling cycle represents a deterministic message forwarded in the scheduling cycle, and a dotted line represents a first preset threshold value δ. The left diagram of Figure 13 shows a deterministic message that should be forwarded in each scheduling cycle, that is, the deterministic message buffered in the scheduling queue associated with each scheduling cycle. It can be seen from the left diagram of Figure 13 that the scheduling queues 0, 4, and 7 are relatively free, while the scheduling queues 1 and 6 are relatively busy.

By using the technical solution provided by the examples of the present disclosure, taking the scheduling queue 6 as an example, the number of messages buffered in the scheduling queue 6 exceeds δ, and the network device adds a preset identifier to the scheduling queue 6. That is, the first scheduling queue is the scheduling queue 6, and the first scheduling cycle is the scheduling cycle 6. When the scheduling cycle 5 is reached, the network device translates a portion of the deterministic messages in the scheduling queue 6 to the scheduling cycle 5, and the total buffered number of the portion of the deterministic messages in the scheduling queue 6 that are translated to the scheduling cycle 5 and deterministic messages in the scheduling queue 5 is δ. That is, the network device forwards the deterministic messages buffered in the scheduling queue 5, and then forwards the deterministic messages buffered in the scheduling queue 6 after completing forwarding the deterministic messages buffered in the scheduling queue 5. The total buffered amount of deterministic messages forwarded in the scheduling cycle 5 is δ. For the remaining deterministic messages in the scheduling queue 6, the network device forwards these deterministic messages when the scheduling cycle 6 is reached.

Other relative busy scheduling queues, such as scheduling queue 1, perform shared forwarding in the same way. At this time, the messages actually forwarded in each scheduling cycle are shown in the right diagram of Figure 13. In the right diagram of Figure 13, a portion filled with right slanted lines represents the deterministic message buffered in the scheduling queue associated with the corresponding scheduling cycle, and a portion filled with vertical lines represents that the deterministic message buffered in the scheduling queue associated with the preceding scheduling cycle are translated to the deterministic messages of this scheduling cycle.

In the technical solution provided by the examples of the present disclosure, the network device translates some deterministic messages in the first scheduling queue to the second scheduling cycle for forwarding, thus avoiding the first scheduling cycle being too busy and ensuring messages are output more smoothly, thereby overall improving the forwarding efficiency of messages and the utilization of network device resources.

In order to further ensure the smooth output of messages and improve the forwarding efficiency of messages and the utilization of network device resources, in some examples, the network device can also be configured with a preset adjustment step size, to complete the sharing for the first scheduling cycle through multiple scheduling cycles.

In this case, as shown in Figure 14, the above message transmission method may include:
Block S141: monitoring a scheduling cycle, wherein one scheduling cycle is associated with at least one scheduling queue, which is the same as the above block S41.
Block S142: when it is monitored that a fourth scheduling cycle is reached, forwarding a deterministic message buffered in a scheduling queue associated with a next scheduling cycle of the fourth scheduling cycle after completing forwarding a deterministic message buffered in a scheduling queue associated with the fourth scheduling cycle, a total buffered amount of deterministic messages forwarded in the fourth scheduling cycle being less than or equal to the first preset threshold value.

In an example of the present disclosure, the network device can determine the fourth scheduling cycle based on the preset adjustment step size after determining the first scheduling cycle that requires shared forwarding.

When it is monitored that the fourth scheduling cycle is reached at the current time, the network device first forwards a deterministic message buffered in the scheduling queue associated with the current fourth scheduling cycle, after completing forwarding the deterministic message buffered in the scheduling queue associated with the current fourth scheduling cycle, it then forwards a deterministic message buffered in the scheduling queue associated with the next scheduling cycle of the fourth scheduling cycle.

In an example of the present disclosure, in order to further improve the smoothness of message output, the total buffered amount of deterministic messages forwarded in the fourth scheduling cycle is equal to the first preset threshold value, there is a remaining deterministic message in the scheduling queue associated with the next scheduling cycle of the fourth scheduling cycle; or the total buffered amount of deterministic messages forwarded in the fourth scheduling cycle is less than the first preset threshold value, there are no remaining deterministic messages in the scheduling queue associated with the next scheduling cycle of the fourth scheduling cycle. That is, the network device tries its best to forward the deterministic messages in the scheduling queue associated with the next scheduling cycle of the fourth scheduling cycle, so as to reduce the transmission jitter between devices and further improve the smoothness of message output.

Block S143: taking a next scheduling cycle of the fourth scheduling cycle as a new fourth scheduling cycle, and repeating block S104 until the second scheduling cycle is reached, wherein a step size from the fourth scheduling cycle to the first scheduling cycle is a preset adjustment step size.

In an example of the present disclosure, after obtaining the new fourth scheduling cycle, the network device repeats block S 142, that is, when it is monitored that a fourth scheduling cycle is reached, the network device forwards a remaining deterministic message in the scheduling queue associated with the current fourth scheduling cycle, and then forwards a deterministic message buffered in the scheduling queue associated with a next scheduling cycle of the current fourth scheduling cycle after completing forwarding the remaining deterministic message in the scheduling queue associated with the current fourth scheduling cycle.

When the new fourth scheduling cycle is the second scheduling cycle, the network device no longer executes block S143, that is, the network device no longer takes a next scheduling cycle of the fourth scheduling cycle as the new fourth scheduling cycle. Instead, the network device executes block S144 after executing block S142.

Block S144: when it is monitored that the second scheduling cycle is reached, after completing forwarding a deterministic message buffered in a second scheduling queue associated with the second scheduling cycle, forwarding a deterministic message buffered in the first scheduling queue having a preset identifier, a total buffered amount of deterministic messages forwarded in the second scheduling cycle being equal to a first preset threshold value, which is the same as the above block S423.

Block S145: when it is monitored that the first scheduling cycle is reached, forwarding a remaining deterministic message in the first scheduling queue, which is the same as the above block S424.

Still taking the message transmission scenario shown in Figure 8 as an example, the node V adopts the forward translation shared forwarding mode when it cyclically schedules the corresponding scheduling queues according to the scheduling cycles, as shown in Figure 15.

In Figure 15, one scheduling queue corresponds to one scheduling cycle, a number represents an identifier of a scheduling cycle, a filling in each scheduling cycle represents a deterministic message forwarded in the scheduling cycle, and a dotted line represents a first preset threshold value δ. The left diagram of Figure 15 shows the deterministic message that should be forwarded in each scheduling cycle, that is, the deterministic message buffered in the scheduling queue associated with each scheduling cycle. As can be seen from the left diagram of Figure 15, the scheduling queues 0, 4, and 7 are relatively free, while the scheduling queues 1 and 6 are relatively busy.

By using the technical solution provided by the examples of the present disclosure, taking the scheduling queue 6 as an example, the number of messages buffered in the scheduling queue 6 exceeds δ, and the network device adds a preset identifier to the scheduling queue 6. That is, the first scheduling queue is the scheduling queue 6, and the first scheduling cycle is the scheduling cycle 6. The preset adjustment step size is 2, and the fourth scheduling cycle is the scheduling cycle 4. When the scheduling cycle 4 is reached, the network device translates a portion of the deterministic messages in the scheduling queue 5 to the scheduling cycle 4, and the total buffered number of the portion of the deterministic messages in the scheduling queue 5 which are translated to the scheduling cycle 4 and the deterministic messages in the scheduling queue 4 is less than or equal to δ. That is, the network device forwards the deterministic messages buffered in the scheduling queue 4, and then forwards the deterministic messages buffered in the scheduling queue 5 after completing forwarding the deterministic messages buffered in the scheduling queue 4. The total buffered amount of deterministic messages forwarded in the scheduling cycle 4 is less than or equal to δ.

When the scheduling cycle 5 (the second scheduling cycle) is reached, the network device translates a portion of the deterministic messages in the scheduling queue 6 to the scheduling cycle 5, and the total buffered number of the portion of the deterministic messages in the scheduling queue 6 which are translated to the scheduling cycle 5 and the deterministic messages in the scheduling queue 5 is δ. That is, the network device forwards the remaining deterministic messages in the scheduling queue 5, and then forwards the deterministic messages buffered in the scheduling queue 6 after completing forwarding the remaining deterministic messages buffered in the scheduling queue 5. The total buffered amount of deterministic messages forwarded in the scheduling cycle 5 is δ. For the remaining deterministic messages in the scheduling queue 6, the network device forwards these deterministic messages when the scheduling cycle 6 is reached.

Other relatively busy scheduling queues, such as scheduling queue 1, perform shared forwarding in the same way. At this time, the messages actually forwarded in each scheduling cycle are shown in the right figure of Figure 15. In the right diagram of Figure 15, a portion filled with right slanted lines represents a deterministic message buffered in the scheduling queue associated with the corresponding scheduling cycle, and a portion filled with vertical lines represents that a deterministic message buffered in the scheduling queue associated with the preceding scheduling cycle are translated to the deterministic messages of this scheduling cycle.

In the technical solution provided by the examples of the present disclosure, scheduling queue shaping, sharing between scheduling cycles and smooth output of messages can be achieved through the adjustment and optimization of the above-mentioned first preset threshold value, forward translation shared forwarding, a preset adjustment step size and the like, thereby overall improving forwarding efficiency and resource utilization.

Further, there is a certain scheduling cycle margin in the existing cyclic queuing and forwarding network planning, as shown in Figure 2. By adopting the message transmission method provided by the examples of the present disclosure and using adjacent scheduling cycles for shared forwarding, the scheduling cycle margin can be utilized fully and flexibly.

Further, the above-mentioned network device can be deployed in an aggregation layer or a core layer. By using the technical solutions provided by the examples of the present disclosure, the utilization of the aggregation layer and the core layer can be improved and the bottleneck problem of the network can be solved. In addition, by using the technical solutions provided by the examples of the present disclosure, not only the jitter between network devices in the aggregation layer and core layer is eliminated, but also the end-to-end jitter can be controlled to a reasonable extent by the devices at both ends of the end-to-end communication through latency compensation and other methods, thus ensuring a deterministic transmission.

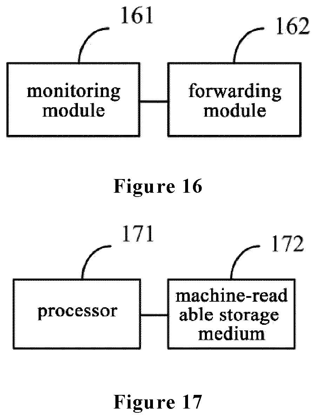

Corresponding to the above message transmission methods, examples of the present disclosure further provides a message transmission apparatus, which is applied to the network device, as shown in Figure 16, the apparatus includes:
a monitoring module 161, to monitor a scheduling cycle, wherein one scheduling cycle is associated with at least one scheduling queue;
a forwarding module 162, to forward a deterministic message buffered in a first scheduling queue having a preset identifier when it is monitored that a target scheduling cycle is reached, wherein the target scheduling cycle includes a first scheduling cycle associated with the first scheduling queue and a second scheduling cycle adjacent to the first scheduling cycle.

In some examples, the preset identifier indicates that a buffered amount of deterministic messages in the first scheduling queue exceeds a first preset threshold value.

In some examples, a ratio of the first preset threshold value to a maximum forwarding capability value of the network device within a duration of one scheduling cycle is a first preset multiple, the first preset multiple is less than 1.

In some examples, a total buffered amount of deterministic messages in all scheduling queues of the network device is less than a second preset threshold value.

In some examples, a ratio of the second preset threshold value to a total maximum forwarding capability of the network device within a total duration of all scheduling cycles being a second preset multiple, the second preset multiple is less than 1.

In some examples, the first scheduling cycle is a preceding scheduling cycle of the second scheduling cycle;
the forwarding module 162 can be specifically to:
forward a deterministic message buffered in the first scheduling queue having the preset identifier when it is monitored that the first scheduling cycle is reached, a total buffered amount of deterministic messages forwarded in the first scheduling cycle being a first preset threshold value;
forward remaining deterministic messages in the first scheduling queue when it is monitored that the second scheduling cycle is reached.

In some examples, the forwarding module 162 can be further to:
forward a deterministic message buffered in a second scheduling queue associated with the second scheduling cycle after completing forwarding a deterministic message buffered in a scheduling queue associated with a preceding scheduling cycle, when it is monitored that the second scheduling cycle is reached, a total buffered amount of deterministic messages forwarded in the second scheduling cycle being less than or equal to the first preset threshold value;
take a next scheduling cycle of the second scheduling cycle as a new second scheduling cycle, and repeat the operation of forwarding, when it is monitored that the second scheduling cycle is reached, a deterministic message buffered in a second scheduling queue associated with the second scheduling cycle after completing forwarding a deterministic message buffered in the scheduling queue associated with the preceding scheduling cycle, until a third scheduling cycle is reached, wherein a step size from the first scheduling cycle to the third scheduling cycle is a preset adjustment step size.

In some examples, the total buffered amount of deterministic messages forwarded in the second scheduling cycle is equal to the first preset threshold value, there is a remaining deterministic messages in the second scheduling queue; or
the total buffered amount of deterministic messages forwarded in the second scheduling cycle is less than the first preset threshold value, there are no remaining deterministic messages in the second scheduling queue.

In some examples, the first scheduling cycle is a next scheduling cycle of the second scheduling cycle;
the forwarding module 162 can be specifically to:
forward a deterministic message buffered in the first scheduling queue having the preset identifier after completing forwarding a deterministic message buffered in a second scheduling queue associated with a second scheduling cycle, when it is monitored that the second scheduling cycle is reached, and a total buffered amount of deterministic messages forwarded in the second scheduling cycle being equal to a first preset threshold value;
forward the remaining deterministic messages in the first scheduling queue when it is monitored that the first scheduling cycle is reached.

In some examples, the forwarding module 162 can be further to:
forward a deterministic message buffered in a scheduling queue associated with a next scheduling cycle of a fourth scheduling cycle after completing forwarding a deterministic message buffered in a scheduling queue associated with the fourth scheduling cycle when it is monitored that the fourth scheduling cycle is reached, a total buffered amount of deterministic messages forwarded in the fourth scheduling cycle being less than or equal to the first preset threshold value; and
take a next scheduling cycle of the fourth scheduling cycle as a new fourth scheduling cycle and repeat the operation of forwarding, when it is monitored that the fourth scheduling cycle is reached, a deterministic message buffered in a scheduling queue associated with the next scheduling cycle of the fourth scheduling cycle after completing forwarding a deterministic message buffered in a scheduling queue associated with the fourth scheduling cycle, until the second scheduling cycle is reached, a size from the fourth scheduling cycle to the first scheduling cycle being a preset adjustment step size.

In some examples, the total buffered amount of deterministic messages forwarded in the fourth scheduling cycle is equal to the first preset threshold value, there is a remaining deterministic message in the scheduling queue associated with the next scheduling cycle of the fourth scheduling cycle; or the total buffered amount of deterministic messages forwarded in the fourth scheduling cycle is less than the first preset threshold value, there are no remaining deterministic messages in the scheduling queue associated with the next scheduling cycle of the fourth scheduling cycle.

In some examples, the network device is configured with a parameter of scheduling queue number, a parameter of scheduling queue length, a parameter of cycle number, and a parameter of cycle width, which are adjustable, wherein
the parameter of scheduling queue number is to indicate the number of scheduling queues included in the network device;
the parameter of scheduling queue length is to indicate a buffered amount of one scheduling queue;
the parameter of cycle number is to indicate the number of scheduling cycles included in the network device;
the parameter of cycle width is to indicate a duration of one scheduling cycle.

In some examples, the network device is located in an aggregation layer or a core layer.

In the technical solutions provided by the examples of the present disclosure, a scheduling cycle is associated with a scheduling queue. For a first scheduling queue associated with a first scheduling cycle and having a preset identifier, the network device forwards a message buffered in the first scheduling queue by using the first scheduling cycle and a second scheduling cycle adjacent to the first scheduling cycle. That is, a message buffered in a scheduling queue associated with one scheduling cycle is shared by two scheduling cycles. In this way, messages forwarded in each of the scheduling cycles can be balanced, causing that the buffered messages in each of the scheduling queues are output smoothly, and thereby improving the resource utilization of the network device.

Corresponding to the above message transmission methods, an example of the present disclosure further provides a network device, which includes a processor 171 and a machine-readable storage medium 172, as shown in Figure 17, wherein the machine-readable storage medium 172 stores machine-executable instructions that can be executed by the processor 171, and cause the processor 171 to carry out any one of the above message transmission methods.

The machine-readable storage medium 172 may include random access memory (RAM) or non-volatile memory (Non-Volatile Memory, NVM), such as at least one disk memory. Optionally, the machine-readable storage medium 172 may also be at least one storage device located remotely from the aforementioned processor.

The processor 171 can be a general-purpose processor, including a central processing unit (CPU), a network processor (Network Processor, NP) or the like; the processor 171 can also be a digital signal processor (DSP), application-specific integrated circuit (ASIC), Field-Programmable Gate Array (FPGA) or other programmable logic devices, discrete gate or transistor logic devices, and discrete hardware components.

In yet another example provided by the present disclosure, a computer-readable storage medium is further provided, which stores a computer program thereon, the computer program, when being executed by a processor, the computer program carries out any one of the above message transmission methods.

In yet another example provided by the present disclosure, a computer program product containing instructions is further provided, which, when run on a computer, causes the computer to carry out any one of the above message transmission methods.

The above examples may be implemented fully or partially by software, hardware, firmware, or any combination thereof. When implemented by software, they may be implemented fully or partially in the form of a computer program product. The computer program product includes one or more computer instructions. When the computer program instructions are loaded and executed on a computer, the processes or functions described in the examples of the present disclosure are generated in whole or in part. The computer may be a general-purpose computer, a special-purpose computer, a computer network, or other programmable device. The computer instructions may be stored in a computer-readable storage medium or transmitted from one computer-readable storage medium to another, for example, the computer instructions may be transmitted from a website, computer, server, or data center to another website, computer, server or data center over wired (such as coaxial cable, optical fiber, digital subscriber line (DSL)) or wireless (such as infrared, wireless, microwave, etc.) means. The computer-readable storage medium may be any available medium that can be accessed by a computer or a data storage device such as servers and data centers, among others, that contain one or more available media integrations. The available medium may be a magnetic medium (e.g., floppy disk, hard disk, magnetic tape), an optical medium (e.g., DVD), or a semiconductor medium (e.g., Solid State Disk (SSD)), or the like.

It is noted that in the specification, relational terms such as first and second are only used to distinguish one entity or operation from another entity or operation, and do not necessarily require or imply that any such actual relationship or sequence exists between these entities or operations. Furthermore, the terms "comprise", "include" or any other variations thereof are intended to cover a non-exclusive inclusion such that a process, method, article, or apparatus that includes a list of elements includes not only those elements, but also other elements not expressly listed, or elements inherent to the process, method, article or apparatus. Without any further limitation, an element defined by the statement "comprises a..." does not exclude the presence of additional identical elements in a process, method, article, or apparatus that includes the stated element.

Various examples in this specification are described in a related manner. The same and similar parts between the various examples can be referred to each other. Each example focuses on its differences from other examples. In particular, the apparatus, network device, computer-readable storage medium and computer program product examples are described briefly because they are basically similar to the method examples. For relevant details, reference can be made to the description of the method examples.

The above are only preferred examples of the present disclosure and are not intended to limit the present disclosure. Any modifications, equivalent substitutions, improvements or the like made within the spirit and principles of the present disclosure fall into the protection scope of the present disclosure.

## Claims

1. A message transmission method, which is applied to a network device, comprising:
monitoring a scheduling cycle, wherein one scheduling cycle is associated with at least one scheduling queue;
when it is monitored that a target scheduling cycle is reached, forwarding a deterministic message buffered in a first scheduling queue having a preset identifier, wherein the target scheduling cycle comprises a first scheduling cycle associated with the first scheduling queue and a second scheduling cycle adjacent to the first scheduling cycle.

2. The method according to claim 1, wherein the preset identifier indicates that a buffered amount of deterministic messages in the first scheduling queue exceeds a first preset threshold value.

3. The method according to claim 2, wherein a ratio of the first preset threshold value to a maximum forwarding capability value of the network device within a duration of one scheduling cycle is a first preset multiple, the first preset multiple is less than 1.

4. The method according to claim 1, wherein a total buffered amount of deterministic messages in all scheduling queues of the network device is less than a second preset threshold value.

5. The method according to claim 4, wherein a ratio of the second preset threshold value to a total maximum forwarding capability of the network device within a total duration of all scheduling cycles is a second preset multiple, the second preset multiple is less than 1.

6. The method according to claim 1, wherein the first scheduling cycle is a preceding scheduling cycle of the second scheduling cycle;
wherein the operation of when it is monitored that a target scheduling cycle is reached, forwarding a deterministic message buffered in a first scheduling queue having a preset identifier comprises:
when it is monitored that the first scheduling cycle is reached, forwarding a deterministic message buffered in the first scheduling queue having the preset identifier, a total buffered amount of deterministic messages forwarded in the first scheduling cycle being a first preset threshold value;
when it is monitored that the second scheduling cycle is reached, forwarding a remaining deterministic message in the first scheduling queue.

7. The method according to claim 6, further comprising:
when it is monitored that the second scheduling cycle is reached, forwarding a deterministic message buffered in a second scheduling queue associated with the second scheduling cycle after completing forwarding a deterministic message buffered in a scheduling queue associated with a preceding scheduling cycle, a total buffered amount of deterministic messages forwarded in the second scheduling cycle being less than or equal to the first preset threshold value;
taking a next scheduling cycle of the second scheduling cycle as a new second scheduling cycle and repeating the operation of when it is monitored that the second scheduling cycle is reached, forwarding a deterministic message buffered in a second scheduling queue associated with the second scheduling cycle after completing forwarding a deterministic message buffered in a scheduling queue associated with a preceding scheduling cycle, until a third scheduling cycle is reached, wherein a step size from the first scheduling cycle to the third scheduling cycle is a preset adjustment step size.

8. The method according to claim 7, wherein
the total buffered amount of deterministic messages forwarded in the second scheduling cycle is equal to the first preset threshold value, there is a remaining deterministic message in the second scheduling queue; or
the total buffered amount of deterministic messages forwarded in the second scheduling cycle is less than the first preset threshold value, there are no remaining deterministic messages in the second scheduling queue.

9. The method according to claim 1, wherein the first scheduling cycle is a next scheduling cycle of the second scheduling cycle,
the operation of when it is monitored that a target scheduling cycle is reached, forwarding a deterministic message buffered in a first scheduling queue having a preset identifier comprises:
when it is monitored that the second scheduling cycle is reached, forwarding a deterministic message buffered in the first scheduling queue having the preset identifier after completing forwarding a deterministic message buffered in a second scheduling queue associated with the second scheduling cycle, a total buffered amount of deterministic messages forwarded in the second scheduling cycle being equal to a first preset threshold value;
when it is monitored that the first scheduling cycle is reached, forwarding a remaining deterministic message in the first scheduling queue.

10. The method according to claim 9, further comprising:
when it is monitored that a fourth scheduling cycle is reached, forwarding a deterministic message buffered in a scheduling queue associated with a next scheduling cycle of the fourth scheduling cycle after completing forwarding a deterministic message buffered in a scheduling queue associated with the fourth scheduling cycle, a total buffered amount of deterministic messages forwarded in the fourth scheduling cycle is less than or equal to the first preset threshold value;
taking a next scheduling cycle of the fourth scheduling cycle as a new fourth scheduling cycle, and repeating the operation of when it is monitored that a fourth scheduling cycle is reached, forwarding a deterministic message buffered in a scheduling queue associated with a next scheduling cycle of the fourth scheduling cycle after completing forwarding a deterministic message buffered in a scheduling queue associated with the fourth scheduling cycle, until the second scheduling cycle is reached, wherein a step size from the fourth scheduling cycle to the first scheduling cycle is a preset adjustment step size.

11. The method according to claim 10, wherein
the total buffered amount of deterministic messages forwarded in the fourth scheduling cycle is equal to the first preset threshold value, there is a remaining deterministic message in the scheduling queue associated with the next scheduling cycle of the fourth scheduling cycle; or
the total buffered amount of deterministic messages forwarded in the fourth scheduling cycle is less than the first preset threshold value, there are no remaining deterministic messages in the scheduling queue associated with the next scheduling cycle of the fourth scheduling cycle.

12. The method according to any one of claims 1-11, wherein the network device is configured with a parameter of scheduling queue number, a parameter of scheduling queue length, a parameter of cycle number, and a parameter of cycle width, which are adjustable, wherein
the parameter of scheduling queue number is to indicate the number of scheduling queues comprised in the network device;
the parameter of scheduling queue length is to indicate a buffered amount of one scheduling queue;
the parameter of cycle number is to indicate the number of scheduling cycles comprised in the network device;
the parameter of cycle width is to indicate a duration of one scheduling cycle.

13. The method according to any one of claims 1-11, wherein the network device is located in an aggregation layer or a core layer.

14. A message transmission apparatus, which is applied to a network device, comprising:
a monitoring module, to monitor a scheduling cycle, wherein one scheduling cycle is associated with at least one scheduling queue; and
a forwarding module, to forward a deterministic message buffered in a first scheduling queue having a preset identifier when it is monitored that a target scheduling cycle is reached, wherein the target scheduling cycle comprises a first scheduling cycle associated with the first scheduling queue and a second scheduling cycle adjacent to the first scheduling cycle.

15. The apparatus according to claim 14, wherein the preset identifier indicates that a buffered amount of deterministic messages in the first scheduling queue exceeds a first preset threshold value.

16. The apparatus according to claim 15, wherein a ratio of the first preset threshold value to a maximum forwarding capability value of the network device within a duration of one scheduling cycle is a first preset multiple, the first preset multiple is less than 1.

17. The apparatus according to claim 14, wherein a total buffered amount of deterministic messages in all scheduling queues of the network device is less than a second preset threshold value.

18. The apparatus according to claim 17, wherein a ratio of the second preset threshold value to a total maximum forwarding capability of the network device within a total duration of all scheduling cycles is a second preset multiple, the second preset multiple is less than 1.

19. The apparatus according to claim 14, wherein the first scheduling cycle is a preceding scheduling cycle of the second scheduling cycle;
the forwarding module is specifically to:
forward a deterministic message buffered in the first scheduling queue having the preset identifier when it is monitored that the first scheduling cycle is reached, a total buffered amount of deterministic messages forwarded in the first scheduling cycle being a first preset threshold value;
forward a remaining deterministic message in the first scheduling queue when it is monitored that the second scheduling cycle is reached.

20. The apparatus according to claim 19, wherein the forwarding module is further to:
forward a deterministic message buffered in a second scheduling queue associated with the second scheduling cycle after completing forwarding a deterministic message buffered in a scheduling queue associated with a preceding scheduling cycle, when it is monitored that the second scheduling cycle is reached, a total buffered amount of deterministic messages forwarded in the second scheduling cycle being less than or equal to the first preset threshold value;
take a next scheduling cycle of the second scheduling cycle as a new second scheduling cycle and repeat the operation of forwarding, when it is monitored that the second scheduling cycle is reached, a deterministic message buffered in a second scheduling queue associated with the second scheduling cycle after completing forwarding a deterministic message buffered in the scheduling queue associated with the preceding scheduling cycle, until a third scheduling cycle is reached, wherein, a step size from the first scheduling cycle to the third scheduling cycle is a preset adjustment step size.

21. The apparatus according to claim 20, wherein
the total buffered amount of deterministic messages forwarded in the second scheduling cycle is equal to the first preset threshold value, there is a remaining deterministic message in the second scheduling queue; or
the total buffered amount of deterministic messages forwarded in the second scheduling cycle is less than the first preset threshold value, there are no remaining deterministic messages in the second scheduling queue.

22. The apparatus according to claim 14, wherein the first scheduling cycle is a next scheduling cycle of the second scheduling cycle;
the forwarding module is specifically to:
forward a deterministic message buffered in the first scheduling queue having the preset identifier after completing forwarding a deterministic message buffered in a second scheduling queue associated with the second scheduling cycle, when it is monitored that the second scheduling cycle is reached, a total buffered amount of deterministic messages forwarded in the second scheduling cycle being equal to a first preset threshold value;
forward a remaining deterministic message in the first scheduling queue when it is monitored that the first scheduling cycle is reached.

23. The apparatus according to claim 22, wherein the forwarding module is further to:
forward a deterministic message buffered in a scheduling queue associated with a next scheduling cycle of a fourth scheduling cycle after completing forwarding a deterministic message buffered in a scheduling queue associated with the fourth scheduling cycle when it is monitored that the fourth scheduling cycle is reached, a total buffered amount of deterministic messages forwarded in the fourth scheduling cycle being less than or equal to the first preset threshold value;
take a next scheduling cycle of the fourth scheduling cycle as a new fourth scheduling cycle, and repeat the operation of forwarding, when it is monitored that a fourth scheduling cycle is reached, a deterministic message buffered in a scheduling queue associated with the next scheduling cycle of the fourth scheduling cycle after completing forwarding a deterministic message buffered in a scheduling queue associated with the fourth scheduling cycle, until the second scheduling cycle is reached, a step size from the fourth scheduling cycle to the first scheduling cycle being a preset adjustment step size.

24. The apparatus according to claim 23, wherein
the total buffered amount of deterministic messages forwarded in the fourth scheduling cycle is equal to the first preset threshold value, there is a remaining deterministic message in the scheduling queue associated with the next scheduling cycle of the fourth scheduling cycle; or
the total buffered amount of deterministic messages forwarded in the fourth scheduling cycle is less than the first preset threshold value, and there are no remaining deterministic messages in the scheduling queue associated with the next scheduling cycle of the fourth scheduling cycle.

25. The apparatus according to any one of claims 14-24, wherein the network device is configured with a parameter of scheduling queue number, a parameter of scheduling queue length, a parameter of cycle number, and a parameter of cycle width, which are adjustable, wherein
the parameter of scheduling queue number is to indicate the number of scheduling queues comprised in the network device;
the parameter of scheduling queue length is to indicate a buffered amount of one scheduling queue;
the parameter of cycle number is to indicate the number of scheduling cycles comprised in the network device; and
the parameter of cycle width is to indicate a duration of one scheduling cycle.

26. The apparatus according to any one of claims 14-24, wherein the network device is located in an aggregation layer or a core layer.

27. A network device, comprising a processor and a machine-readable storage medium storing thereon machine-executable instructions that can be executed by the processor, and cause the processor to carry out the method according to any one of claims 1-13.

28. A computer-readable storage medium, storing a computer program thereon, wherein the computer program, when executed by a processor, carries out the method according to any one of claims 1 to 13.

29. A computer program product, which when run on a computer, causes the computer to carry out the method according to any one of claims 1 to 13.
